# EUROPEAN PATENT SPECIFICATION

(11) **EP 1 110 629 B1**
(45) Date of publication and mention of the grant of the patent: **09.07.2008**
(21) Application number: 00128286.2
(22) Date of filing: 22.12.2000
(51) Int. Cl.: B09C 1/06, B01D 53/00, C25B 1/26

(54) **Method and apparatus for purifying polluted soil and for decomposing polluted gas**
Verfahren und Vorrichtung zum Reinigen von verseuchtem Erdreich und Zersetzen von kontaminierten Gasen
Procédé et dispositif pour le nettoyage de sols pollués et la décomposition de gaz contaminés

(30) Priority: 22.12.1999 JP 36383299; 16.06.2000 JP 2000181169
(43) Date of publication of application: 27.06.2001
(73) Proprietor: CANON KABUSHIKI KAISHA, Tokyo (JP)
(72) Inventor: Kato, Kinya, c/o CANON K. K., Tokyo (JP); Kawaguchi, Masahiro, c/o CANON K. K., Tokyo (JP)
(74) Representative: Weser, Wolfgang

(56) References cited:
- EP-A- 0 841 305
- DE-A- 4 400 308
- US-A- 4 966 665
- US-A- 5 427 658
- US-A- 5 616 234

## Description

### BACKGROUND OF THE INVENTION

### Field of the Invention

The present invention relates to a method and an apparatus for purifying polluted soil and to an apparatus for emitting a chlorine-containing gas and an apparatus for decomposing a polluted gas using the same.

### Related Background Art

With the development of industrial technology in recent years, the use of organochlorine compounds (for example, chlorinated ethylene and chlorinated methane) has become enormous, and the disposal of such compounds has become a serious problem. In addition, there have arisen serious environmental problems such as soil and groundwater pollutions with the used organochlorine compounds as pollutants. Thus efforts have been made so as to solve such problems.

To be concrete, one well-known example of the methods in common use of treating such pollutions is to dig up the soil and subject the same to heat treatment so as to separate hazardous pollutants therefrom, as disclosed in, for example, Japanese Patent Application Laid-Open No. 4-215708. Another well-known method in current use is to expose the soil having organochlorine compounds mixed therein to microwave and subject the same to dielectric heating so as to remove the organochlorine compounds (Japanese Patent Application Laid-Open No. 8-164376).

In addition, it is known that chlorinated aliphatic hydrocarbons such as trichloroethylene and tetrachloroethylene are subjected to aerobic or anaerobic decomposition by microorganisms, and attempts have been made to decompose the chlorinated aliphatic hydrocarbons and purify the soil utilizing such a process.

On the other hand, as for the treatment other than the treatment for polluted soil, there are disclosed in Japanese Patent Application Laid-Open No. 54-66376 an electrolysis vessel for performing electrolysis using as an electrolysis solution a halide aqueous solution consisting of NaCl or NaBr and an apparatus including the above electrolysis vessel for removing an offensive odor by, first, aerating the cathode-side liquid in the electrolysis vessel with the gas as an odor source and, then, aerating the anode-side liquid in the electrolysis vessel with the gas used for the above aeration. However, with this apparatus, it is necessary to go through the processes of: aerating the cathode-side liquid in the electrolysis with a gas as an odor source; recovering the gas from the cathode-side liquid; and aerating the anode-side liquid in the electrolysis vessel with the recovered gas. Therefore, the treatment of a gas as an odor source may not always be performed in a stable manner.

In Japanese Patent Publication No. 53-17816, there is disclosed a method of treating an organic waste fluid by dissolving aluminum chloride or iron chloride therein and electrolyzing the chloride while exposing the same to ultraviolet light. The above patent publication states that the organic matter in a waste fluid can be decomposed with the active species of oxygen produced by the action of ultraviolet light on the chlorite which is produced from the chloride subjected to electrolysis.

However, even with the treatment method disclosed in the above patent publication, the treatment may not always be performed in a stable manner because of the changes in chloride concentration of the waste fluid.

It is also known that functional water obtained by electrolyzing water, for example, acid water has a bactericidal effect (Japanese Patent Application Laid-Open No. 1-180293) and a cleaning effect on contaminants on semiconductor wafers (Japanese Patent Application Laid-Open No. 7-51675).

These four patent publications, however, disclose nothing related to purification of the polluted soil.

EP 1005881 discloses a method and an apparatus for decomposing halogenated aliphatic hydrocarbon compounds or aromatic compounds. This document forms part of the state of the art according to Article 54(3) EPC.

### SUMMARY OF THE INVENTION

In light of the facts that most technologies in current use of removing pollutants from the soil require further detoxification treatment as well as relatively complicated apparatus for decomposing the pollutants, the present inventors concluded that providing a method and an apparatus for treating the polluted soil in a simple, stable and environment-friendly manner would enable the decrease in industrial waste, which is inevitably produced with the industrial progress, as well as the decrease in the pollution due to the above industrial waste more easily, and hence, would largely contribute to the fields associated with the polluted soil treatment.

Accordingly, the object of the present invention is to provide a method of purifying polluted soil in a simple, efficient and stable manner and an apparatus for use in performing the above method, and in addition, an apparatus comprising means for emitting chlorine-containing gas which is applicable to the purification of the polluted soil.

These objects are achieved by the method of purifying polluted soil according to claims 1 and 2 and the apparatus for purifying polluted soil according to claims 27 and 28. The other claims relate to further developments.

According to the method and apparatus for purifying polluted soil of the present invention, the decomposition of halogenated aliphatic hydrocarbon compounds, as pollutants, contained in the soil can be achieved thoroughly even at low costs, and hence, the purification of the soil. This is far different from the methods and apparatus in current use in which halogenated aliphatic hydrocarbon compounds, as pollutants, are just transferred from the soil to the media such as activated carbon.

Further, according to the apparatus for emitting a chlorine-containing gas of the present invention, a chlorine-containing gas can be emitted in a controllable and stable manner. And according to the apparatus for decomposing a polluted gas of the present invention, which is constructed in such a manner as to arrange the above apparatus for emitting a chlorine-containing gas therein, a polluted gas can be decomposed in a controllable and stable manner.

### BRIEF DESCRIPTION OF THE DRAWINGS

FIG. 1 is a schematic view showing one form of apparatus for purifying polluted soil embodying the present invention;
FIG. 2 is a schematic view showing another form of apparatus for purifying polluted soil embodying the present invention;
FIG. 3 is a schematic view showing still another form of apparatus for purifying polluted soil embodying the present invention;
FIG. 4 is a schematic view-showing another form of apparatus for purifying polluted soil embodying the present invention;
FIG. 5 is a schematic view showing another form of apparatus for purifying polluted soil embodying the present invention;
FIG. 6 is a schematic view showing still another form of apparatus for purifying polluted soil embodying the present invention;
FIG. 7 is a schematic view showing another form of apparatus for purifying polluted soil embodying the present invention;
FIG. 8 is a schematic view showing another form of apparatus for purifying polluted soil embodying the present invention; and
FIG. 9 is a schematic view showing another form of apparatus for purifying polluted soil embodying the present invention.

### DETAILED DESCRIPTION OF THE PREFERRED EMBODIMENTS

The present invention is described in detail.

The method for purifying polluted soil of the present invention is characterized in that it comprises the steps of heating the polluted soil to make the soil emit the pollutant, and bringing functional water, which is capable of decomposing the pollutant in the presence of light, into contact with the emitted pollutant under light irradiation.

Another embodiment of the method for purifying polluted soil of the present invention is characterized in that it comprises the steps of heating the polluted soil to make the soil emit a gas containing the pollutant, passing a gas through functional water to generate a chlorine-containing gas, mixing the pollutant-containing gas with the chlorine-containing gas to form a gaseous mixture, and irradiating the gaseous mixture with light to decompose the pollutant.

The apparatus of the present invention for purifying polluted soil is provided, which comprises a means for heating the polluted soil to make the soil emit the pollutant, a means for bringing the emitted pollutant into contact with functional water, and a means for irradiating the functional water with light.

Another embodiment of the apparatus of the present invention for purifying polluted soil is provided, which comprises a means for heating the polluted soil to make the soil emit a gas containing the pollutant, a means for generating the chlorine-containing gas by passing a gas through functional water, a means for mixing the pollutant-containing gas with the chlorine-containing gas to form a gaseous mixture, and a means for irradiating the gaseous mixture with light.

In the method for purifying polluted soil and apparatus for purifying polluted soil of the present invention, it is preferable to heat the polluted soil by heater or by mixing an inorganic compound exothermically reacting with water to the soil.

The method for purifying polluted soil and apparatus for purifying polluted soil of the present invention broadly fall into two general categories: one bringing functional water into contact with the pollutant under light irradiation, and the other irradiating, with light, the mixture of the gas polluted with the pollutant emitted from the soil by heating the soil and chlorine-containing gas generated by passing the gas through functional water.

These two types of embodiments have the common features: the polluted soil is placed in a given closed space, where it is heated to emit the gaseous pollutant.

In the type of embodiment with the functional water brought into contact with the pollutant while being irradiated with light, the gaseous pollutant emitted is sent to a reaction tank, where it is brought into contact with the functional water. When irradiated with light, the functional group decomposes the pollutant dissolved therein by its decomposition function. The method for bringing the gaseous pollutant into contact with the functional water is not limited, but it is preferable to secure a sufficient area for the gas/liquid contact. For example, it is preferable, when the gaseous pollutant is directly passed through the functional water, to keep the gas bubbles as small as possible. The functional group can be also efficiently brought into contact with the gaseous pollutant, when it is finely divided by, e.g., spraying, or dropped onto, e.g., a plurality of baffles.

On the other hand, in the type of embodiment where the mixture of the gas polluted with the pollutant and chlorine-containing gas evolved by passing the gas through functional water is irradiated with light, the mixture of the gaseous pollutant and chlorine-containing gas evolved by passing a gas through the functional water is irradiated with light to decompose the pollutant.

In both types of embodiments, the pollutant adsorbed by soil is eventually emitted, to purify the polluted soil and, at the same time, the pollutant from the soil is decomposed, to complete the purification process.

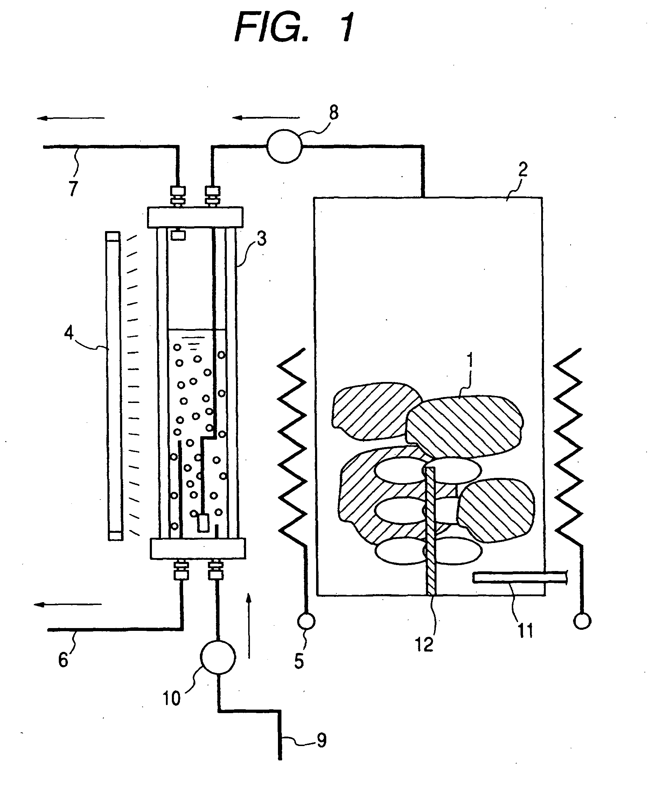

FIG. 1 outlines one embodiment of the apparatus of the present invention for purifying polluted soil. It purifies soil polluted with a halogenated aliphatic hydrocarbon, e.g., organic chlorine compound, by releasing the compound from the soil and decomposing it. It is composed of the heating tank 2 which contains the polluted soil 1, functional water reaction tank 3 in which the functional water is brought into contact with the pollutant emitted, while being irradiated with light, and light emitting means 4, which emits light with which the functional water is irradiated. The heating tank 2 is designed in such a way to be-supplied with the soil 1 polluted with, e.g., an organic chlorine compound, and is provided with the heating means 5 which can heat the polluted soil 1.

The apparatus of the above structure for purifying polluted soil places the soil 1 polluted with a halogenated aliphatic hydrocarbon compound, e.g., organic chlorine compound, at a given position in the heating tank 2, and heats the polluted soil 1 by the heating means 5, to emit the pollutant 1 and thereby to purify the polluted soil 1. This step may be referred to as the heating step. Then, the pollutant-containing gas is directed into the functional water reaction tank 3 by the pump 8, where the gas is passed through the functional water. The functional water reaction tank 3 is equipped with a functional water supply device (not shown), and the pipe 9 and pump 10 by which the functional water is supplied. The functional water is irradiate with light emitted from the light emitting means 4, to decompose the pollutant in the functional water. This step may be referred to as the purification/decomposition step. The used functional water for the treatment is discharged via the discharge pipe 6. The purified gas is discharged via the discharge pipe 7. The intake pipe 11 serves as the passage for air flowing into the tank 2 from the outside while the pump 8 is working. The stirring means 12 stirs the polluted soil 1. The apparatus may be further equipped with means for passing the gas discharged via the pipe 7 over an adsorbent, e.g., activated carbon, to adsorb the undecomposed pollutant. Moreover, it may be so structured to concentrate the gas discharged from the heating step by adsorbing it on an adsorbent, e.g., activated carbon, and to direct the gas emitted from the adsorbent to the functional water reaction tank 3.

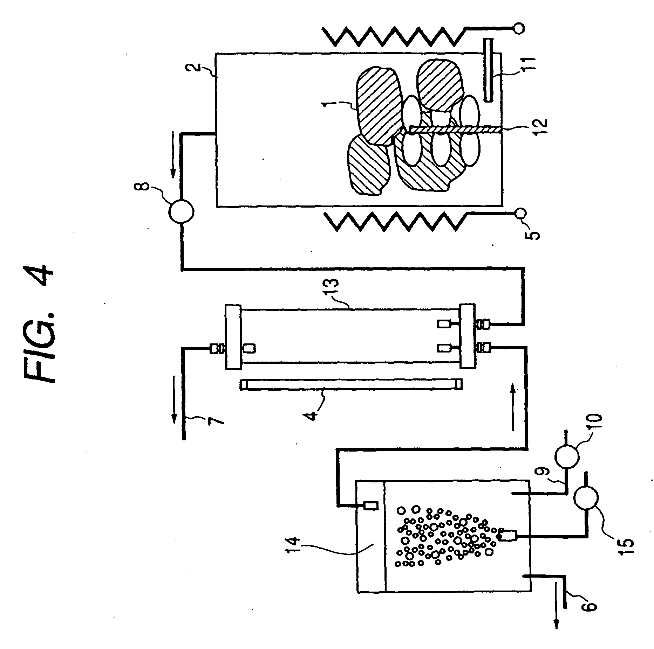

Another embodiment of the apparatus for purifying the polluted soil is described by referring to FIG. 4. The apparatus shown in FIG. 4 is of a type in which the mixture of the gas polluted with the pollutant emitted out of the heated soil and chlorine-containing gas evolved by passing the gas through functional water (This operation is also referred to as "aerating functional water with the gas", hereinafter.) is irradiated with light, unlike the one shown in FIG. 1 in which the functional water is brought into contact with the pollutant while being irradiated with light.

Each member of the apparatus shown in FIG. 4 is marked with the same number as the corresponding one in FIG. 1, when they have the same function. The apparatus shown in FIG. 4 is composed of the heating tank 2 which contains the polluted soil 1, functional water aeration tank 14 which aerates the functional water to evolve the chlorine-containing gas, treatment tank 13 in which the pollutant-containing gas from the heating tank 2 is mixed with the chlorine-containing gas evolved in the functional water aeration tank 14, and light emitting means 4, which emits light with which the mixed gas is irradiated.

The apparatus shown in FIG. 4 mainly differs from the one shown in FIG. 1 in that the pollutant is directly decomposed not by the functional water by itself but by the chlorine-containing gas evolved by aeration of the functional water and that the chlorine-containing gas is supplied to the treatment tank 13 where it is mixed with the pollutant-containing gas.

The apparatus shown in FIG. 4 places the soil 1 polluted with a halogenated aliphatic hydrocarbon compound, e.g., organic chlorine compound, at a given position in the heating tank 2, and heats the polluted soil 1 by the heating means 5, to emit the pollutant 1 and thereby to purify the polluted soil 1. The pollutant-containing gas is directed into the treatment tank 13 by the pump 8, and, at the same time, the gas is passed through the functional water to evolve the chlorine-containing gas, which is directed into the treatment tank 13. The functional water aeration tank is equipped with a functional water supply device (not shown), and the pipe 9 and pump 10 by which the functional water is supplied. The functional water is aerated by the pump 15 as the means for supplying the gas into the functional water. It is preferable to form a number of bubbles in the functional water, in order to efficiently evolve the chlorine-containing gas.

The gaseous mixture in the treatment tank 13 is irradiate with light emitted from the light emitting means 4, to decompose the pollutant in the mixture. This step may be referred to as the purification/decomposition step. The used functional water for the treatment is discharged out of the functional water aeration tank 14 via the discharge pipe 6. The purified gas is discharged via the discharge pipe 7. The intake pipe 11 serves as the passage for air flowing into the tank 2 from the outside while the pump 8 is working. The stirring means 12 stirs the polluted soil 1. The apparatus may be further equipped with means for passing the gas discharged via the pipe 7 over an adsorbent, e.g., activated carbon, to adsorb the undecomposed pollutant. Moreover, it may be so structured to concentrate the gas discharged from the heating step by adsorbing it on an adsorbent, e.g., activated carbon, and to direct the gas emitted from the adsorbent to the treatment tank 13.

The decomposition process is not fully understood. It is however considered that electrolysis of water containing an electrolyte, e.g., sodium chloride, generates the functional water or the like in the vicinity of the anode, which contains hypochlorous acid or hypochlorite to make the water acidic and increase chlorine existing ratio. The chlorine radicals or the like are possibly excited, when the solution is irradiated with light, to accelerate decomposition of the pollutant.

Passing air through the functional water transfers chlorine from the water into the vapor phase, and chlorine is mixed with the pollutant also in the vapor phase. The chlorine radicals or the like are possibly excited, when the gaseous mixture is irradiated with light, to accelerate decomposition of the pollutant. It is considered that the decomposition proceeds mainly in the vapor phase rather than in the liquid phase.

In the heating step, a heater may be replaced by an inorganic compound exothermically reacting with water, which is added to the polluted soil. The heat generated by the exothermic reaction evaporates the volatile organic chlorine compound from the soil. This brings about the advantage of massively treating the polluted soil at a cost lower than that required for heating the soil by the heater.

An indirect heating type unit, e.g., rotary kiln, may be used for heating the polluted soil to emit the pollutant therefrom. It contains the polluted soil in a rotating tubular body, heats the soil being stirred in the rotating tubular body from the outside to above boiling point of the pollutant, and evaporated the pollutant into carrier air supplied from the outside to emit the pollutants out of the unit. It well matches the constitutional requirements of the present invention.

Next, the apparatus for generating a chlorine-containing gas of the present invention and the apparatus for decomposing a polluted gas also of the present invention, incorporating the former apparatus, are described. The apparatus for generating a chlorine-containing gas of the present invention is comprised of a containing means for containing functional water; a functional water-supplying means for supplying the functional water to the containing means; a first gas-supplying means for supplying a gas through the functional water to generate a gas containing chlorine derived from the functional water; a second gas-supplying means for supplying the chlorine-containing gas to another containing means; and a concentration-measuring means for measuring the concentration of the chlorine-containing gas; the functional water-supplying means, the first gas-supplying means, the second gas-supplying means and the concentration-measureing means being connected to the containing means, respectively.

The apparatus for decomposing a polluted gas of the present invention is comprised of a gas-containing means for containing a plurality of gases including a chlorine-containing gas supplied by the second gas-supplying means of the apparatus for generating a chlorine-containing gas; a polluted gas-supplying means for supplying a polluted gas to the gas-containing means; a light irradiating means for irradiating the gases contained in the gas-containing means with light, the polluted gas-supplying means being connected to the gas-containing means; and the apparatus for generating a chlorine-containing gas of the present invention.

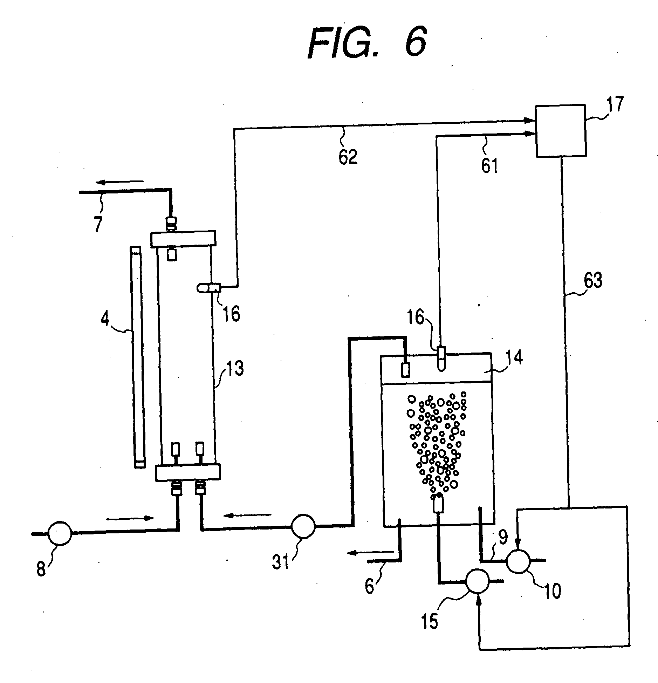

The chlorine-containing gas evolving unit and polluted gas decomposing unit of the present invention are described by referring to FIG. 6. Each member of the unit shown in FIG. 6 is marked with the same number as the corresponding one in FIG. 1 or 4, when they have the same function.

FIG. 6 schematically illustrates one embodiment of the polluted gas decomposing unit of the present invention, in which the chlorine-containing gas evolving unit of the present invention is used.

Referring to FIG. 6, the chlorine-containing gas evolving unit of the present invention is composed of the functional water aeration tank 14 (functional water containing means), pipe 9 and pump 10 (functional water supplying means), pump 15 for passing the gas through the functional water (gas supplying means), pump 31 for supplying the chlorine-containing gas to the gas containing means (gas supplying means), and sensor 16 for measuring concentration of the chlorine-containing gas in the functional water aeration tank 14 (concentration measuring means). The polluted gas decomposing unit of the present invention comprises the above chlorine-containing gas evolving unit, treatment tank 13 (gas-containing means for treating two or more types of gases), pump 8 for supplying the polluted gas containing the pollutant to the treatment tank 13 (polluted material supplying means), and light emitting means 4 which emits light onto the gas contained in the treatment tank 13. The unit of this embodiment is further provided with the sensor 16 for measuring concentration of the gas in the treatment tank 13 or functional water aeration tank 14, and controller 17 which transmits the control signal 63 to the pump 10 as the functional water supplying means and/or pump 15 as the means for supplying the gas to the functional water, based on the gas concentration information signals 61 and/or 62 from the sensor 16 provided in the functional water aeration tank 14 and/or treatment tank 13. This system controls flow rate of the functional water to be supplied to the functional water aeration tank 14 and/or of the gas aerating the functional water, and hence controls concentration and flow rate of the chlorine-containing gas contained in the aeration tank 14 at optimal levels.

The above chlorine-containing gas evolving unit of the present invention can therefore stably evolve chlorine-containing gas whose concentration is controlled at a desired level. The polluted gas decomposing unit of the present invention, comprising the above chlorine-containing gas evolving unit, can stably supply the chlorine-containing gas of desired concentration from the chlorine-containing gas evolving unit to the treatment tank 13, and, at the same time, efficiently decompose the pollutant gas in the treatment tank 13, because concentration of the gas in the treatment tank 13 is measured by the sensor 16 and feedbacked based on concentration information of the gaseous mixture of the gas polluted with the pollutant and chlorine-containing gas in the treatment tank 13.

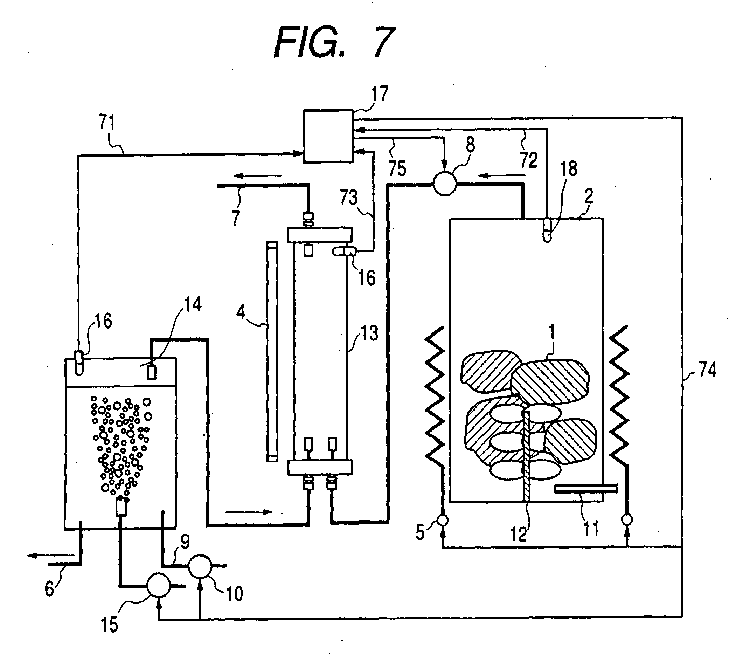

Next, the apparatus of the present invention for purifying polluted soil, comprising the polluted gas decomposing unit of the present invention, is described by referring to FIG. 7. The apparatus shown in FIG. 7 comprises the polluted gas decomposing unit shown in FIG. 6, and the unit extracting the gas containing the pollutant emitted out of the polluted soil by heating, which is composed of the heating tank 2 which contains the polluted soil 1, heating means 5 provided in the heating tank 2, and means 12 for stirring the polluted soil 1, wherein the heating tank 2 is connected to the pump 8 (FIG. 6) to send the polluted gas containing the pollutant to the treatment tank 13. The heating tank 2 is provided with the sensor 16 for measuring concentration of the gas in the tank 2, the concentration information signal of the gas in the tank 2 being transmitted to the controller 17. Therefore, the apparatus for purifying polluted soil is provided with the sensor in the unit for supplying the gas containing the pollutant, in addition to the sensors provided in the functional water aeration tank 14 (non-electrolysis tank) and treatment tank 13, to measure concentration of the gas in each tank and thereby optimally control each unit that constitutes the apparatus in accordance with the gas concentration. This design helps purify the polluted soil highly efficiently and stably.

Control of the apparatus shown in FIG. 7 is described. The following information items are inputted in the controller 17, where the number in the parenthesis after each information item or control name corresponds to the one shown in FIG. 7.
Functional water aeration tank 14: Chlorine gas concentration (71)
Heating tank 2: Pollutant concentration (gas), temperature, or stirring speed (each 72)
Treatment tank 13: Pollutant concentration, chlorine gas concentration (each 73)

The following devices can be controlled, based on one of the above input information items:
Pump 10: Control of flow rate of the functional water (74)
Pump 15: Control of flow rate of the gas for aeration (74)
Heating means 5: Control for heating temperature
Stirring means 12: Control of stirring speed
Pump 8: Control of flow rate of the polluted gas (75)
Light emitting means 4: Control of emitted light intensity

The concrete control examples are described below:
1. Control of the functional water aeration tank 14 (Concentration of chlorine gas)
   (1) When chlorine gas concentration decreases to below the desired level: Increase flow rate at the pump 10 and/or decrease flow rate at pump 15
   (2) When chlorine gas concentration increases to above the desired level: Decrease flow rate at the pump 10 and/or increase flow rate at pump 15

   The chlorine gas concentration may be controlled mainly by the flow rate at the pump 10, when disturbances of the overall flow balances are to be minimized.
2. Control of the heating tank 2 (Concentration of the pollutant, temperature or stirring speed)
   (1) When pollutant concentration decreases to below the desired level: Increase temperature at the heating means 5, and/or increase speed of rotation at the stirring means 12, and/or decrease flow rate at the pump 8
   (2) When pollutant concentration increases to above the desired level: Decrease temperature at the heating means 5, and/or decrease speed of rotation at the stirring means 12, and/or increase flow rate at the pump 8.

   The pollutant concentration may be controlled mainly by temperature at the heating means 5, and/or speed of rotation at the stirring means 12, when disturbances of the overall flow balances are to be minimized. It is preferable to adjust temperature at the heating means and speed of rotation at the stirring means slowly, even under the normal conditions, because pollutant concentration changes slowly.
3. Control of the treatment tank 13 (Pollutant or chlorine gas concentration)
   (1) When the pollutant remains: Increase chlorine concentration, and/or increase emitted light intensity, and/or decrease pollutant concentration, and/or decrease flow rate of the pollutant, and/or decrease the overall flow rate (or increase residence time)
   (2) When chlorine remains: Decrease chlorine concentration, and/or increase pollutant concentration, and/or increase flow rate of the pollutant, and/or increase the overall flow rate (or decrease residence time)

In the actual control of the apparatus, 1. control of the functional water aeration tank 14, 2. control of the heating tank 2, and 3. control of the treatment tank 13 may be combined one another.

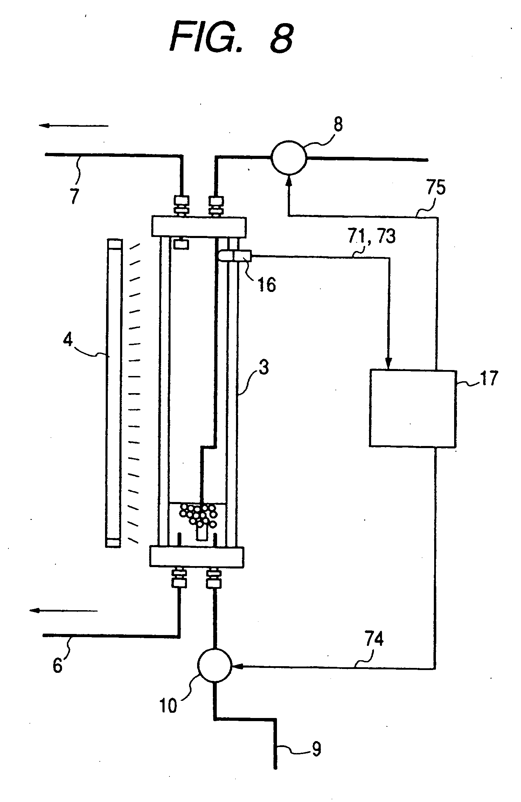

Next, the apparatus shown in FIG. 8 is described. It is the apparatus shown in FIG. 7 in which the functional water aeration tank 14 is combined with the treatment tank 13, and this portion is highlighted in FIG. 8. It has the functional water reaction tank 3, serving the functions of the functional water aeration tank 14 and treatment tank 13 shown in FIG. 7, and the sensor 16 provided in the reaction tank 3. In this apparatus, the gas for aerating the functional water is supplied via the pump 9 to the functional water reaction tank 3, and the functional water is aerated by the gas. Thus, this apparatus evolves the chlorine-containing gas in the functional water reaction tank 3, and mixes this gas with the pollutant-containing gas supplied via the pump 8. In this state, the gaseous mixture is irradiated with light from the light emitting means 4, to decompose the pollutant. The apparatus can be controlled by the aid of sensors 16 in a manner similar to the one described above.

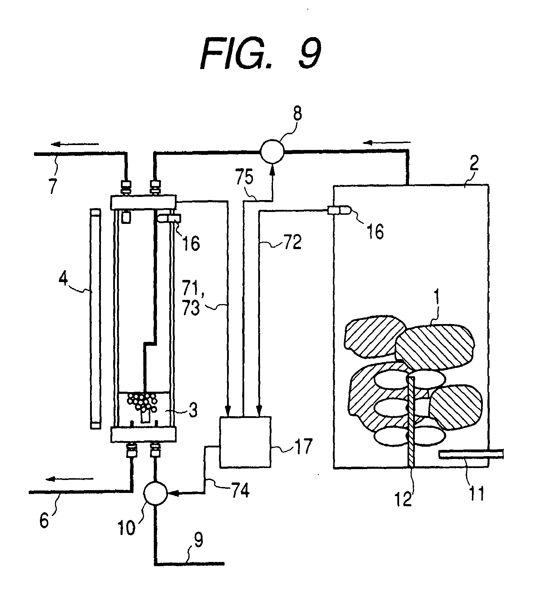

Next, the apparatus shown in FIG. 9 is described. It is the apparatus shown in FIG. 9 which further incorporates the unit for supplying the pollutant-containing gas, composed of the heating tank 2, stirring means 12 and sensors 16 in addition to the apparatus shown in FIG. 8. It has the functional water reaction tank 3, which is a combination of the functional water aeration tank 14 and treatment tank 13, shown in FIG. 7. It can be controlled in the same manner as the one shown in FIG. 7, except that the gaseous mixture in the functional water reaction tank 3 is irradiated with light.

The present invention is described in more detail.

### (Polluted soil to be treated)

The type of polluted soil to be treated by the present invention is not limited. The pollutants to be removed are preferably those decomposable with a functional water and light. These include halogenated aliphatic hydrocarbon compounds, which contain at least one of chlorine and fluorine. The present invention is particularly suitable for removing organic chlorine compounds. These compounds include trichloroethylene, 1,1,1-trichloroethane, tetrachloroethylene, cis-1,2-dichloroethylene, chloroform, and dichloromethane. Those having a boiling point of 60 to 120°C at normal pressure are suitable, when an inorganic compound exothermically reacting water is used as the heat source. These include, for example, 1,1,1-trichloroethane, trichloroethylene, tetrachloroethylene, chloroform and ethane dichloride.

### (Heating means)

The heating means for the present invention is not limited. Heat may be supplied from an electrical heater, or generated by an exothermic reaction.

### (When an electrical heater is used)

Any heater may be used to heat the polluted soil in the heating tank. When a microwave oscillator for the normal microwave oven for domestic purposes (2,450 MHZ, 1.2 kW) is used, surface temperature of, e.g., 120°C can sufficiently evaporate the pollutant from the soil. The system is a dry system, using no steam for heating, and shows good energy-saving effect and is installed at a relatively low cost.

### (When an inorganic compound exothermically reacting with water is used)

The suitable inorganic compounds exothermically reacting with water include oxides of alkali metal and alkali-earth metals, and sulfates of alkali-earth metals, e.g., quick lime, magnesium oxide, barium oxide, strontium oxide, sodium oxide, potassium oxide, anhydrides of calcium sulfate and magnesium sulfate. Of these, quick lime is more preferable for its safety, cost and heat generating efficiency. Commercially available industrial quick lime may be used, and the one having a purity of 85% or more as CaO is preferable for the present invention to fully exhibit its effect. The inorganic compound suitable for the present invention is normally powdery or granular, the latter being more preferable for its workability when it is to be mixed with the soil.

When mixed with the soil polluted with a halogenated aliphatic hydrocarbon compound, the inorganic compound reacts with water in the soil to generate heat, thereby evaporating and releasing the halogenated aliphatic hydrocarbon compound.

The present invention exhibits its effect especially notably, when the polluted soil to be treated contains water at 10 to 30 wt.% (which is a normal range of water content). It is therefore preferable, when water is present at below 10 wt.% in the soil, that water is sprayed onto, and mixed with, the soil before treatment, to increase its water content to at least 10 wt.%.

The method to mix the inorganic compound with the soil is not limited. The inorganic compound, e.g., quick lime, may be sprayed onto the soil, and physically mixed therewith at the site, or it may be placed in soil to form a sandwich structure. Thus, it may be mixed with the soil evenly or unevenly, the former being more preferable for the effect for removing the halogenated aliphatic hydrocarbon compound. The polluted soil may be collected, and mixed evenly in another place or in a container, depending on circumstances.

It is preferable to adjust the soil in such a way to keep its temperature at 15°C or higher, preferably 30°C or higher, while it is mixed with the inorganic compound, although varying depending on desired extent for mixing and quantity and water content of the polluted soil, in order to reduce time and increase efficiency for removing the halogenated aliphatic hydrocarbon compound. For the polluted soil containing water at 10 to 30 wt.%, for example, quantity of quick lime of 0.01 to 0.5 times of the water quantity in the polluted soil to be treated, preferably 0.05 to 0.3 times, is sufficient to attain the purpose.

It is preferable to subject the polluted soil mixed with the inorganic compound roll processing (compression using physical means). This will ensure closer contact between the inorganic compound and water in the polluted soil, and accelerate heat accumulation during the initial stage, leading to reduced time for heating the polluted soil, increased efficiency for insulating the soil, and hence increased efficiency for removing the halogenated aliphatic hydrocarbon compound. The method for increasing pressure is not limited. For example, the polluted soil may be physically compressed by a roller.

Time required for removing the halogenated aliphatic hydrocarbon compound can be reduced, and hence removal efficiency can be increased, by mixing the organic compound and then well stirring the polluted soil when its temperature reaches the peak or nearby level. In particular, even when the polluted soil is solidified to some extent by compression, a simple stirring procedure divides the polluted soil particles to be more fine to sufficiently bring about the above effect, because incorporation of the inorganic compound decreases water content of the soil to make the soil less viscous and more fluid.

The halogenated aliphatic hydrocarbon compound thus emitted is decomposed, when irradiated with light while in contact with the functional water, to purify the polluted soil.

The pollutant emitted is also decomposed and made harmless.

### (Functional water generator and functional water)

The functional water to be used in the functional water reaction tank includes, e.g., water having a hydrogen ion concentration (pH value) of 1 to 4, redox potential of 800 to 1,500 mV with platinum as the working electrode and silver/silver oxide as the reference electrode, and chlorine concentration of 5 to 150 mg/l.

Such functional water may be prepared by electrolysis of water dissolving an electrolyte (e.g., sodium chloride or potassium chloride) in a water tank provided with a pair of electrodes. It is produced in the vicinity of the anode. Preferable electrolyte content is 20 to 2,000 mg/l, in case of sodium chloride. Disposition of a membrane between a pair of electrodes can produce the functional water capable for decomposing the organic compound more efficiently, because it prevents the acidic functional water generated in the vicinity of the anode from being mixed with alkaline water generated in the vicinity of the cathode. The suitable membrane includes an ion-exchanging membrane.

The functional water may be produced by a commercial generator of strongly acidic electrolyzed water (e.g., Asahi Glass Engineering's Oasis Biohalf^{™}, and Amano's Model FW-200^{™}). The functional water produced by a generator having no membrane may be also used for decomposition of the organic compound, when it has a redox potential of 300 to 1,100 mV, chlorine concentration of 2 to 100 mg/l and pH of 4 to 10.

Electrolysis is not the sole method for preparing the functional water. Water which undergoes no electrolysis can decompose an organic chlorine compound almost as effectively as the one prepared by electrolysis, when incorporated with various reagents, e.g., 0.001 to 0.1 mol/l of hydrochloric acid, 0.005 to 0.02 mol/l of sodium chloride and 0.0001 to 0.01 mol/l of sodium hypochlorite. The functional water having a pH level of 4 or more can be also prepared without depending on electrolysis by incorporating various reagents, e.g., 0.001 to 0.1 mol/l of hydrochloric acid, 0.001 to 0.1 mol/l of sodium hydroxide and 0.0001 to 0.01 mol/l of sodium hypochlorite, or only sodium hypochlorite at 0.0001 to 0.01 mol/l. The functional water having pH of 4.0 or less and effective chlorine content of 2 mg/l or more may be also prepared with hydrochloric acid and sodium hypochlorite.

Hydrochloric acid may be replaced by another inorganic acid (e.g., hydrofluoric, sulfuric, phosphoric or boric acid) or organic acid (e.g., acetic, formic, malic, citric or oxalic acid). In addition, the functional water may be prepared using, e.g., N₃C₃O₃NaCl₂ (e.g., Clean Chemical's Kinosan 21X^{™}), which is commercially available as the agent for producing a weakly acidic, aqueous powder. The functional water incorporated with these additives can decompose an organic chlorine compound to varying extent, when irradiated with light, as described in one of Examples. The raw water for the functional water may be service water, river water, seawater, or the like. The raw water normally has pH of 6 to 8 and contains chlorine at 1 mg/l at the highest, and naturally shows no capacity for decomposing an organic chlorine compound.

Any type of the functional water described above shows high capacity for decomposing an organic chlorine compound, when irradiated with light, and is useful for the present invention.

### (Chlorine gas concentration, and means for evolving chlorine gas)

It is possible to evolve a chlorine-containing gas necessary for decomposition from the functional water. The chlorine-containing gas may be evolved by passing a gas through the functional water for the present invention, or by various other methods. For example, the chlorine-containing gas may be efficiently evolved by, e.g., bringing a gas (e.g., air) into contact with the functional water finely divided by, e.g., spraying, or by bringing the functional water into contact with air or the like while being dropped onto a plurality of baffles. The gas to be passed through, or brought into contact with, the functional water is preferably not reactive with the functional water, e.g., inert gas, nitrogen gas, or air. A mixture of the gas to be decomposed and chlorine gas may be obtained by passing the pollutant-containing gas instead of air or the like through the functional water. In this case, a chlorine gas of relatively high concentration can be obtained.

The mixture of the gas to be decomposed and chlorine gas is preferably adjusted to have a chlorine concentration of 5 to 1000 ppm, although varying depending on concentration of the gas to be treated. In particular, the gas can be decomposed very efficiently when the concentration is 20 to 500 ppm, more preferably 80 to 300 ppm.

### (Light emitting means)

The light emitting means for the present invention preferably emits light having a wavelength of 300 to 500 nm. The pollutant can be decomposed practically sufficiently, when the functional aqueous solution, gas which has passed through the functional water and pollutant to be decomposed are irradiated with light having an intensity of several hundreds µW/cm² (wavelength: 300 to 400 nm) for a light source having a peak at a wavelength of around 360 nm.

The reaction tank may be made of glass, plastic or the like, because the light emitted is completely free of ultraviolet component harmful to a human body, having a wavelength of around 250 nm or less.

The light sources useful for the present invention include those emitting natural light such as solar ray, or artificial light, e.g., mercury lamp, black light or colored fluorescent lamp.

One of the embodiments of the present invention passes a gas through the functional water to evolve the chlorine-containing gas necessary for decomposing the pollutant. The section for passing the gas through the functional water basically serves as the role for supplying chlorine necessary for the decomposition. The vapor-phase reaction in the subsequent tank for the treatment and decomposition is mainly responsible for the decomposition. Therefore, the ratio of the vapor phase section to the liquid phase section is an important parameter for decomposition capacity of the apparatus, when the evolution of chlorine and decomposition of the pollutant are effected in the same vessel.

More concretely, increasing volume of the functional water increases quantity of chlorine to be supplied, but decreases volume of the vapor phase section, thus decreasing the decomposition field. So is vice versa. Increasing volume of the vapor phase section increases volume of the reaction field, accelerating the decomposition, but decreases volume of the liquid phase section, decreasing chlorine to be supplied. When the evolution of chlorine gas and decomposition (treatment) are effected in the same vessel, it is recommended that the liquid phase accounts for 5 to 30%, preferably 10 to 20%, of the treatment tank, although there are other parameters (e.g., aeration speed and charge rate of chlorine-containing water) to be considered. When the above steps are effected in separate vessels, it is recommended to keep the tank for evolution of chlorine-containing air and tank for the decomposition in a ratio of around 1:2 to 1:9 by volume.

### (Means for passing gas through the functional water)

It is preferable to use a diffuser for passing a gas through the functional water, when the gas contains the pollutant and/or is used for aeration. The diffuser may be a normal one used for blowing a gas into a liquid, but is preferably selected from those which produce the bubbles of size having a sufficient surface areas for diffusing chlorine.

The diffuser is preferably made of a material which is not reactive with the pollutant and functional water component. Those useful for the present invention include porous diffuser plates of sintered glass, porous ceramics, sintered stainless steel (e.g., SUS316) and woven nets of stainless steel (e.g., SUS316) fibers, and spargers of glass and stainless steel (e.g., SUS316) pipes.

The present invention is described more concretely by Examples.

### Example 1

Polluted soil was purified by the apparatus for purifying the polluted soil, shown in FIG. 1.

The polluted soil 1, polluted with organic chlorine compounds and the like, was charged into the heating tank 2 of stainless steel.

The pollutants and their contents are given below:
Trichloroethylene: 11.3 mg/kg
Tetrachloroethylene: 8.1 mg/kg
Dichloromethane: 2.3 mg/kg
1,1,1-trichloroethane: 8.3 mg/kg

An electrical heater (silicon rubber heater) was used as the heating means 5, to heat the polluted soil and emit the pollutant therefrom. The pollutant-containing gas was charged into the functional water reaction tank 3, where it was passed through the functional water.

The functional water used in Example 1 was produced by a strong acid electrolyzed water generator (Asahi Glass Engineering's Oasis Biohalf^{™} (ADE-61)). It had a pH level of 2.2, redox potential of 1,150 mV, residual chlorine concentration of 55 mg/l. The functional water in the reaction tank was irradiated with black light from the light emitting means 4 (Toshiba's FL20BLB^{™}, 20W). The functional water reaction tank was a glass column, allowing no light having a wavelength of 300 nm or less to permeate therethrough.

The pollutant, discharged via the discharge pipe 7, were analyzed by gas chromatography (chromatograph: Shimadzu's GC-14B^{™} equipped with an FID detector, column: J&W's DB-624^{™}). The concentrations of all the pollutant were below the detectable limit. The treated soil was immediately put in a 10 ml container containing n-hexane, and stirred for 10 min. The hexane-layer was collected and analyzed by ECD chromatography. The concentrations of all the pollutant were 0.01 mg/kg or less.

It is thus confirmed that the polluted soil was purified and the pollutants emitted were decomposed.

### Example 2

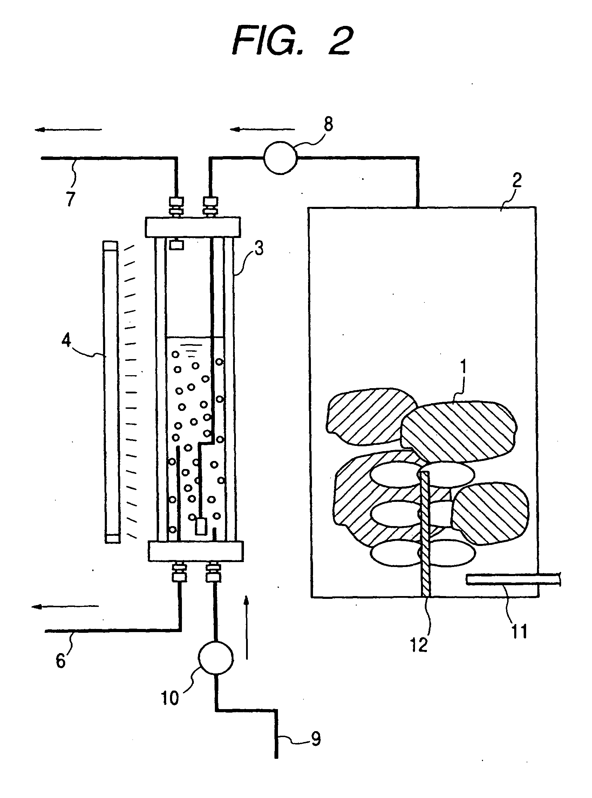

Polluted soil was purified by the apparatus for purifying the polluted soil, shown in FIG. 2, where each member of the apparatus is marked with the same number as the corresponding one in FIG. 1, when they have the same function.

The polluted soil 1, polluted with organic chlorine compounds and the like, was charged into the heating tank 2 of stainless steel.

The pollutants and their contents are given below:
Trichloroethylene: 11.3 mg/kg
Tetrachloroethylene: 8.1 mg/kg
Dichloromethane: 2.3 mg/kg
1,1,1-trichloroethane: 8.3 mg/kg

An inorganic compound exothermically reacting with water was used as the heating means. More concretely, a given quantity of quick lime (purity: 90% or more as CaO), crushed into particles of 5 mm as average size, was well mixed with the polluted soil 1 by the stirring means 12.

The heat generated by the exothermic reaction in the polluted soil 1 evaporated the pollutants. The exothermic reaction was continued for 24 hours with stirring, and the pollutant-containing gas was charged into the functional water reaction tank 3 using the pump 8. The functional water reaction tank 3 and functional water contained therein were similar to those for Example 1.

The pollutant-containing gas was passed through the functional water in the same manner as in Example 1, and the functional water in the reaction tank 3 was irradiated with black light from the light emitting means 4. The pollutants, discharged via the discharge pipe 7, were analyzed in the same manner as in Example 1. The concentrations of all the pollutants were below the detectable limit, and the treated soil was found to contain the pollutants all at 0.01 mg/kg or less. It is thus confirmed that the polluted soil was purified and all pollutants emitted were decomposed.

### Example 3

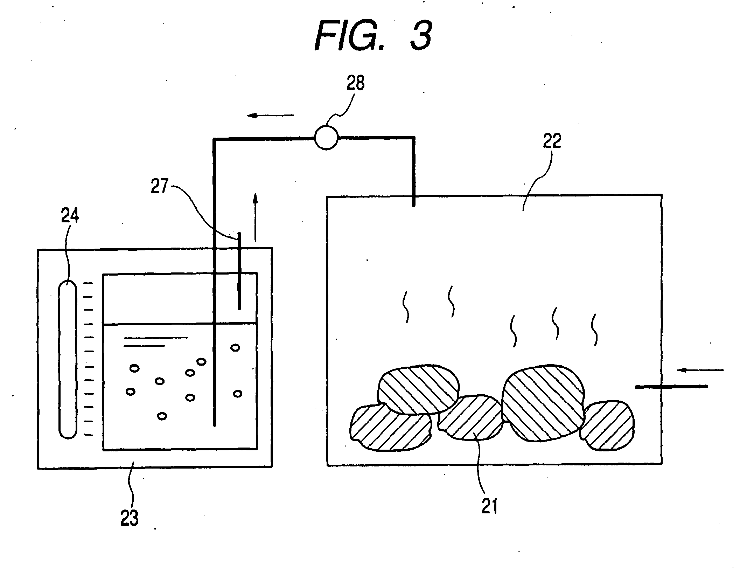

Polluted excavation soil 21, containing 10.3 mg/kg of trichloroethylene and 18.0 wt.% of water, was transferred into the vinyl house 22, shown in FIG. 3. Temperature of the polluted soil was 11°C. Quick lime (CaO content: 90% or more) was evenly sprayed onto the polluted soil surface to 4 wt.%, based on the whole polluted soil, and stirred by a scoop for mixing. The mixture was immediately compressed by a roller, and temperature rise was monitored. Stirring by a scoop was started when temperature reached to the attainable peak. Temperature of the mixture changed in a range between 25 to 33°C, when it was stirred a couple of times. Concentration of trichloroethylene was decreased to 0.9 mg/kg in 10 hours. The mixture was again stirred in a similar manner for additional 10 hours. Its temperature changed in a range between 22 to 29°C, and concentration of trichloroethylene was further decreased to 0.01 mg/kg or less. At this stage, the polluted soil contained water at 12.7 wt.%. Stirring crushed the solidified soil into fine particles of uniform size.

The polluted air in the vinyl house was transferred by the pump 28 to the functional water reaction/treatment unit 23, where the polluted air was passed through the functional water. Then, the inside of the unit 23 was irradiated with black light emitted from the light emitting means 24. The functional water was prepared in the same manner as in Example 1.

The vapor-phase concentration of trichloroethylene emitted into the vinyl house changed in a range from 1 to 10 ppm during the polluted soil treatment period (approximately 20 hours), whereas its concentration at the outlet 27 of the functional water reaction/treatment unit was kept at 1 ppm or less.

### Example 4

The test was conducted in the same manner as in Example 2, except that the functional water prepared by electrolysis was replaced by service water incorporated with 0.006 mol/l of hydrochloric acid and 0.002 mol/l of sodium hypochlorite to have a pH level of 2.3, redox potential of 1,180 mV and chlorine concentration of 105 mg/l. The concentrations of all the pollutant, discharged via the discharge pipe 7, were below the detectable limit, and the treated soil was found to contain the pollutants all at 0.01 mg/kg or less. It is thus confirmed that the polluted soil was purified and the pollutants emitted were decomposed.

### Example 5

Polluted soil was purified by the apparatus for purifying the polluted soil, shown in FIG. 4.

The polluted soil 1, polluted with organic chlorine compounds and the like, was charged into the heating tank 2 of stainless steel.

The pollutants and their contents are given below:
Trichloroethylene: 12.0 mg/kg
Tetrachloroethylene: 8.7 mg/kg
Dichloromethane: 2.1 mg/kg
1,1,1-trichloroethane: 8.2 mg/kg

An electrical heater (silicon rubber heater) was used as the heating means 5, to heat the polluted soil and emit the pollutants therefrom. Air was sent via the pump 15 into the functional water aeration tank 14 to prepare the chlorine-containing air, which was sent into the treatment tank 13 together with the pollutant-containing air from the heating tank 2. The gaseous mixture in the treatment tank 13 was irradiated with light from the light emitting means 4, to decompose the pollutants.

The functional water used in Example 5 was produced by a strong acid electrolyzed water generator (Asahi Glass Engineering's Oasis Biohalf^{™} (ADE-61)). It had a pH level of 2.2, redox potential of 1,150 mV, residual chlorine concentration of 75 mg/l. The functional water in the treatment tank was irradiated with black light from the light emitting means 4 (Toshiba's FL20BLB^{™}, 20W). The treatment tank 13 was a glass column, allowing no light having a wavelength of 300 nm or less to permeate therethrough.

The chlorine-containing air, evolved in the functional water aeration tank 14 of polypropylene, contained chlorine at 108 ppm (determined by Gastec's detector tube).

The pollutants, discharged via the discharge pipe 7, were analyzed in the same manner as in Example 1. The concentrations of all the pollutant were below the detectable limit. The treated soil was also analyzed in the same manner as in Example 1. It was found to contain the pollutant all at 0.01 mg/kg or less.

It is thus confirmed that the polluted soil was purified and the pollutants emitted were decomposed.

### Example 6

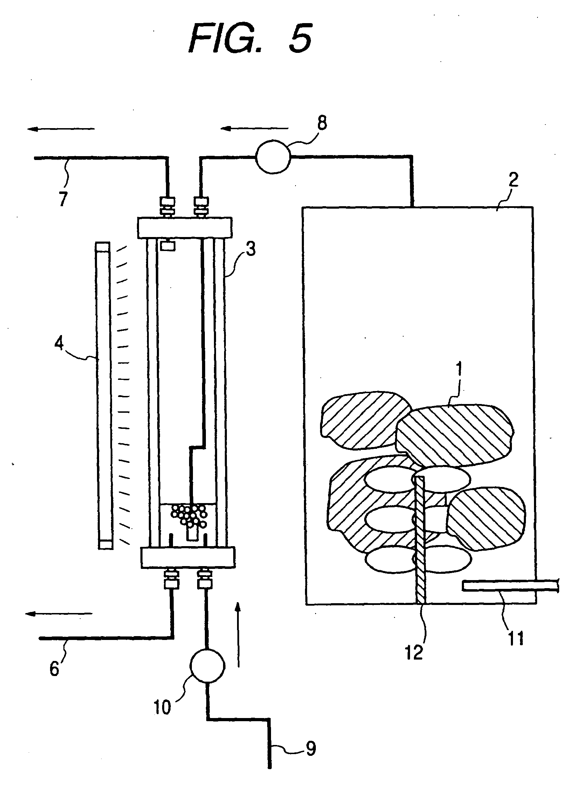

Polluted soil was purified by the apparatus for purifying the polluted soil, shown in FIG. 5. Each member of the apparatus shown in FIG. 5 is marked with the same number as the corresponding one in FIG. 1, when they have the same function.

The polluted soil 1, polluted with organic chlorine compounds and the like, was charged into the heating tank 2 of stainless steel.

The pollutants and their contents are given below:
Trichloroethylene: 12.0 mg/kg
Tetrachloroethylene: 8.7 mg/kg
Dichloromethane: 2.1mg/kg
1,1,1-trichloroethane: 8.2 mg/kg

Heated air was supplied via the intake pipe 11 to the heating tank 2, to heat the polluted soil and emit the pollutants therefrom. The pollutant-containing air was sent into the functional water reaction tank 3, where it was passed through the functional water.

In this example, the same conditions, e.g., apparatus configuration and functional water properties, as for Example 1 were used, except that quantity of the functional water in the functional water reaction tank was reduced to one-eighth and only the vapor phase was irradiated with light.

The pollutant, discharged via the discharge pipe 7, was analyzed in the same manner as in Example 1. The concentrations of all the pollutants were below the detectable limit. The treated soil was also analyzed in the same manner as in Example 1. It was found to contain the pollutants all at 0.01 mg/kg or less.

It is thus confirmed that the polluted soil was purified and the pollutants emitted were decomposed.

### Example 7

Polluted soil was purified by the apparatus for purifying the polluted soil, shown in FIG. 8.

The polluted soil, polluted with organic chlorine compounds and the like, was charged into the heating tank of stainless steel (not shown in FIG. 8) in the same manner as in Example 1.

The pollutants and their contents are given below:
Trichloroethylene: 10.5 mg/kg
Cis-dichloroethylene: 5.0 mg/kg
1,1,1-trichloroethane: 7.5 mg/kg

An electrical heater (silicon rubber heater) was used as the heating means, to heat the polluted soil and emit the pollutants therefrom. The pollutant-containing gas was sent into the functional water reaction tank 3, where it was passed through the functional water.

In this example, the same conditions, e.g., apparatus configuration and functional water properties, as for Example 6 were used, except that pollutants and chlorine gas concentrations in the functional water reaction tank 3 were monitored, to investigate the optimum purification conditions.

In this example, the functional water reaction tank 3 was provided with a sample nozzle for the sensor 16 in FIG. 8, a gas chromatograph (Shimadzu's GC-14B^{™} equipped with an FID detector, column: J&W's DB-624^{™}) or detector tube (Gastec's) which determined the pollutant component concentrations or chlorine gas concentration.

Table 1 gives the test conditions, the measured values inside the functional water reaction tank and the concentrations of pollutants of the gas sampled at the discharge pipe 7 for each run. Unit of each flow rate is ml/min, corresponding to (: one liter) unit of the functional water reaction tank 3.

**[Table 1]**

| Run No. | Flow rate of pollutant-containing gas (ml/min) | Flow rate of functional water (ml/min) | Pollutant gas concentration in the functional water reaction tank (ppm as trichloroethylene) | Chlorine gas concentration in the functional water reaction tank (ppm) | Pollutant gas concentration at the discharge pipe 7 (ppm as trichloroethylene) |
|---|---|---|---|---|---|
| 1 | 300 | 2 | not exceed 0.1 | 20-40 | not exceed 0.1 |
| 2 | 600 | 2 | not exceed 0.1 | 10-25 | not exceed 0.1 |
| 3 | 900 | 2 | not exceed 0.1 | 3-10 | not exceed 0.1 |
| 4 | 900 | 1 | not exceed 0.1 | 0-3 | not exceed 0.1 |
| 5 | 900 | 0.5 | 1 - 2 | 0 | 0.1 -1.0 |
| 6 | 900 | 3 | not exceed 0.1 | 35-70 | not exceed 0.1 |

As shown in Table 1, polluted soil can be optimally treated by controlling flow rate of each stream without excess cost. In this Example, Run No. 4 is considered to provide the optimal conditions, under which each pollutant concentration tended to decrease with time, causing surplus chlorine gas.

The treated soil was analyzed in the same manner as in Example 1. It was found to contain each of the pollutants at 0.01 mg/kg or less.

It is thus confirmed that the polluted soil was purified and the pollutants emitted were decomposed.

## Claims

1. A method of purifying polluted soil which contains a pollutant, **characterized by** comprising the steps of: heating the polluted soil to make the soil emit the pollutant and bringing the emitted pollutant into contact with functional water under light irradiation to decompose the pollutant, wherein the functional water is capable of decomposing the pollutant in the presence of light.

2. A method of purifying polluted soil which contains pollutant, **characterized by** comprising the steps of: heating the polluted soil to make the soil emit a gas containing the pollutant;
passing a gas through functional water capable of thereby generating chlorine gas to generate a gas containing chlorine;
mixing the pollutant-containing gas and the chlorine-containing gas to form a gaseous mixture; and
irradiating the gaseous mixture with light to decompose the pollutant.

3. The method of purifying polluted soil according to claim 1 or 2, **characterized in that** the heating is conducted using a heater.

4. The method of purifying polluted soil according to claim 1 or 2, **characterized in that** the heating is conducted by mixing the polluted soil with an inorganic compound which reacts exothermically with water.

5. The method of purifying polluted soil according to claim 4, **characterized in that** rolling processing is conducted after mixing the polluted soil with the inorganic compound.

6. The method of purifying polluted soil according to claim 4, **characterized in that** stirring processing is conducted after mixing the polluted soil with the inorganic compound.

7. The method of purifying polluted soil according to claim 1 or 2, **characterized in that** the functional water is water produced by electrolysis of water containing an electrolyte.

8. The method of purifying polluted soil according to claim 7, **characterized in that** the functional water is acid functional water produced in the vicinity of an anode by the electrolysis of the water containing an electrolyte.

9. The method of purifying polluted soil according to claim 7 or 8, **characterized in that** the electrolyte is at least one selected from the group consisting of sodium chloride and potassium chloride.

10. The method of purifying polluted soil according to claim 1 or 2, **characterized in that** the functional water is an aqueous solution containing hypochlorous acid.

11. The method of purifying polluted soil according to claim 1 or 2, **characterized in that** the functional water has a hydrogen ion concentration (pH value) of 1 to 4, an oxidation-reduction potential (working electrode: platinum electrode, reference electrode: silver-silver chloride electrode) of 800 to 1500 mV, and a chlorine concentration of 5 to 150 mg/l.

12. The method of purifying polluted soil according to claim 1 or 2, **characterized in that** the functional water has a hydrogen ion concentration (pH value) of 4 to 10, an oxidation-reduction potential (working electrode: platinum electrode, reference electrode:silver-silver chloride electrode) of 300to 1100 mV, and a chlorine concentration of 2 to 100 mg/l.

13. The method of purifying polluted soil according to claim 1 or 2, **characterized in that** the light comprises a light whose wavelength is in the range of 300 to 500 nm.

14. The method of purifying polluted soil according to claim 1 or 2, **characterized in that** the pollutant is a halogenated aliphatic hydrocarbon.

15. The method of purifying polluted soil according to claim 1 or 2, further comprising the step of allowing an adsorption material to adsorb the pollutant.

16. The method of purifying polluted soil according to claim 2, **characterized in that** the gas passed through the functional water is the gas containing the pollutant extracted from the polluted soil.

17. An apparatus for purifying polluted soil which contains a pollutant, **characterized by** comprising a means (5) for heating the polluted soil (1) to make the soil emit the pollutant, a means (8) for bringing the emitted pollutant into contact with functional water capable of decomposing the pollutant In the presence of light, and a means (4) for Irradiating the functional water with light.

18. An apparatus for purifying polluted soil which contains a pollutant, **characterized by** comprising:
a gas-emitting means (5) for heating the polluted soil (1) to make the soil emit a gas containing the pollutant;
a chlorine-containing gas generating means (3) for generating a gas containing chlorine by passing a gas through functional water capable of thereby generating chlorine gas;
a mixing means (13) for mixing the pollutant-containing gas and the chlorine-containing gas so as to form a gaseous mixture; and
a light irradiation means (4) for irradiating the gaseous mixture with light.

19. The apparatus for purifying polluted soil according to claim 17 or 18, **characterized in that** the heating is conducted using a heater (5).

20. The apparatus for purifying polluted soil according to claim or 17 or 18, **characterized in that** the heating is conducted by mixing the polluted soil with an inorganic compound which reacts exothermically with water.

21. The apparatus for purifying polluted soil according to claim 17 or 18 , **characterized in that** the functional water is water produced by electrolysis of water containing an electrolyte.

22. The apparatus for purifying polluted soil according to claim 17 or 18, **characterized in that** the functional water is an aqueous solution containing hypochlorous acid.

23. The apparatus for purifying polluted soil according to claim 17 or 18, **characterized in that** the functional water has a hydrogen ion concentration (pH value) of 1 to 4, an oxidation-reduction potential (working electrode: platinum electrode, reference electrode: silver-silver chloride electrode) of 800 to 1500 mV, and a chlorine concentration of 5 to 150 mg/l.

24. The apparatus for purifying polluted soil according to claim 17 or 18, **characterized in that** the functional water has a hydrogen ion concentration (pH value) of 4 to 10, an oxidation-reduction potential (working electrode: platinum electrode, reference electrode: silver-silver chloride electrode) of 300 to 1100 mV, and a chlorine concentration of 2 to 100 mg/l.

25. The apparatus for purifying polluted soil according to claim 17 or 18, **characterized in that** the light in the means (4) for irradiating the functional water with the light comprises a light whose wavelength is in the range of 300 to 500 nm.

26. The apparatus for purifying polluted soil according to claim 18, **characterized in that** the means for heating the polluted soil is a rotary kiln.

27. The apparatus for purifying polluted soil according to claim 18, **characterized in that** the gas which is passed through the functional water is the gas containing the pollutant extracted from the polluted soil.

28. The apparatus for purifying polluted soil according to claim 18, wherein the chlorine-containing gas generating means comprises:
a containing means (14) for containing functional water;
a functional water-supplying means (9, 10) for supplying the functional water to the containing means;
a first gas-supplying means (15) for supplying a gas through the functional water to generate a gas containing chlorine derived from the functional water;
a second gas-supplying means (31) for supplying the chlorine-containing gas to another containing means (13); and
a concentration-measuring means (16) for measuring the concentration of the chlorine-containing gas;
wherein the functional water-supplying means (9, 10), the first gas-supplying means, the second gas-supplying means and the concentration-measuring means are each connected to the containing means, respectively.

29. The apparatus for purifying polluted soil according to claim 28, **characterized in that** the gas passed through the functional water does not react with the functional water.

30. The apparatus for purifying polluted soil according to claim 28, **characterized in that** a great number of bubbles are created in the functional water by the passing of the gas therethrough.

31. The apparatus for purifying polluted soil according to claim 28, **characterized in that** the first gas-supplying means (15) is controlled depending on the concentration of the chlorine-containing gas measured by the concentration-measuring means (16).

32. The apparatus for purifying polluted soil according to claim 28, **characterized in that** the functional water-supplying means (9, 10) is controlled depending on the concentration of the chlorine-containing gas measured by the concentration-measuring means (16).

33. The apparatus for purifying polluted soil according to any one of claims 28 to 32, wherein
said mixing means comprises a gas-containing means for containing a plurality of gases including a chlorine-containing gas supplied by the second gas-supplying means; and
the polluted gas-supplying means is connected to the gas-containing means.

34. The apparatus for purifying polluted soil according to claim 33, **characterized in that** the second gas-supplying means is connected to the gas-containing means.

35. The apparatus for purifying polluted soil according to claims 33 or 34; **characterized in that** a concentration-measuring means is arranged in the gas-containing means.

36. The apparatus for purifying polluted soil according to claim 35, **characterized in that** the concentration of the chlorine-containing gas supplied by the second gas-supplying means (31) or that of the polluted gas supplied by the polluted gas-supplying means in the gas-containing means (13) is measured by the concentration-measuring means (16) arranged in the gas-containing means.

37. The apparatus for purifying polluted soil according to claim 36, **characterized in that** at least one of the concentration of the chlorine-containing gas, the irradiation intensity of the light irradiating means and the flow rate of the polluted gas 18 controlled depending on the measured values of the concentration-measuring means.

38. The apparatus for purifying polluted soil according to claim 36, **characterized in that** at least one of the flow rate of the chlorine-containing gas the irradiation time of the light irradiating means end the flow rate of the polluted gas is controlled depending on the measured values of the concentration-measuring means.

39. The apparatus for purifying polluted soil according to claim 33, **characterized in that** the polluted gas-supplying means (8) is connected to the polluted soil-containing means (2) for containing the polluted soil and can supply the polluted gas emitted from the polluted soil to the gas-containing means (13).

40. The apparatus for purifying polluted soil according to claim 39, **characterized in that** the polluted soil-containing means (2) is provided with a heating means (5).

41. The apparatus for purifying polluted soil according to claims 39 or 40, **characterized in that** the polluted soil-containing means (2) is provided with a stirring means (12) for stirring the polluted soil contained therein.

42. The apparatus for purifying polluted soil according to claims 40 or 41, **characterized in that** polluted soil-containing means (2) is provided with a concentration-measuring means (16) for measuring the concentration of a gas emitted from the polluted soil contained therein.

43. The apparatus for purifying polluted soil according to claims 40 or 41, **characterized in that** the heating means (5) or the stirring means (12) is controlled depending on the measured values of the concentration-measuring means (16) for measuring the concentration of the gas emitted from the polluted soil.

## Patentansprüche

1. Verfahren zum Reinigen von verseuchtem Erdreich, das einen Schadstoff enthält, **dadurch gekennzeichnet, dass** es die Schritte umfasst:
Erwärmen des verseuchten Erdreichs, so dass das Erdreich den Schadstoff abgibt, und in Kontakt Bringen des abgegebenen Schadstoffs mit zweckentsprechendem Wasser unter Bestrahlen mit Licht, zwecks Zersetzung des Schadstoffes, wobei das zweckentsprechende Wasser den Schadstoff in Gegenwart von Licht zu zersetzen vermag.

2. Verfahren zum Reinigen von verseuchtem Erdreich, das einen Schadstoff enthält, **dadurch gekennzeichnet, dass** es die Schritte umfasst:
Erwärmen des verseuchten Erdreichs derart, dass das Erdreich ein den Schadstoff enthaltendes Gas abgibt;
Leiten eines Gases durch zweckentsprechendes Wasser, das dadurch Chlorgas zu erzeugen vermag, so dass ein chlorhaltiges Gas entsteht; Mischen des den Schadstoff enthaltenden Gases und des chlorhaltigen Gases zum Erhalt eines gasförmigen Gemisches; und
Bestrahlen des gasförmigen Gemischs mit Licht, um den Schadstoff zu zersetzen.

3. Verfahren nach Anspruch 1 oder 2,
**dadurch gekennzeichnet, dass**
das Erwärmen unter Verwendung einer Heizvorrichtung erfolgt.

4. Verfahren nach Anspruch 1 oder 2,
**dadurch gekennzeichnet, dass**
das Erwärmen durchgeführt wird, indem das verseuchte Erdreich mit einer anorganischen Verbindung, die mit Wasser exotherm reagiert, gemischt wird.

5. Verfahren nach Anspruch 4,
**dadurch gekennzeichnet, dass**
eine Walzbehandlung erfolgt, nachdem das verseuchte Erdreich mit der anorganischen Verbindung gemischt worden ist.

6. Verfahren nach Anspruch 4,
**dadurch gekennzeichnet, dass**
eine Rührbehandlung erfolgt, nachdem das verseuchte Erdreich mit der anorganischen Verbindung gemischt worden ist.

7. Verfahren nach Anspruch 1 oder 2,
**dadurch gekennzeichnet, dass**
das zweckentsprechende Wasser durch Elektrolyse von einen Elektrolyt enthaltendem Wasser erzeugt wird.

8. Verfahren nach Anspruch 7,
**dadurch gekennzeichnet, dass**
das zweckentsprechende Wasser vorliegt als saures zweckentsprechendes Wasser, das durch Elektrolyse des einen Elektrolyten enthaltenden Wassers in der Nähe einer Anode erzeugt wird.

9. Verfahren nach Anspruch 7 oder 8,
**dadurch gekennzeichnet, dass**
der Elektrolyt zumindest einer aus der Gruppe von Natriumchlorid und Kaliumchlorid ist.

10. Verfahren nach Anspruch 1 oder 2,
**dadurch gekennzeichnet, dass**
das zweckentsprechende Wasser eine wässrige Lösung, die Hypochlorsäure enthält, ist.

11. Verfahren nach Anspruch 1 oder 2,
**dadurch gekennzeichnet, dass**
das zweckentsprechende Wasser eine Wasserstoffionenkonzentration (pH-Wert) von 1 bis 4, ein Redox-Potential (Arbeitselektrode: Platinelektrode, Bezugselektrode, Silber-Silberchlorid-Elektrode) von 800 bis 1500 mV und eine Chlorkonzentration von 5 bis 150 mg/l aufweist.

12. Verfahren nach Anspruch 1 oder 2,
**dadurch gekennzeichnet, dass**
das zweckentsprechende Wasser eine Wasserstoffionenkonzentration (pH-Wert) von 4 bis 10, ein Redox-Potential (Arbeitselektrode: Platinelektrode, Bezugselektrode, Silber-Silberchlorid-Elektrode) von 300 bis 1100 mV und eine Chlorkonzentration von 2 bis 100 mg/l aufweist.

13. Verfahren nach Anspruch 1 oder 2,
**dadurch gekennzeichnet, dass**
das Licht ein solches einer Wellenlänge im Bereich von 300 bis 500 nm umfasst.

14. Verfahren nach Anspruch 1 oder 2,
**dadurch gekennzeichnet, dass**
der Schadstoff ein aliphatischer Halogenkohlenwasserstoff ist.

15. Verfahren nach Anspruch 1 oder 2,
ferner umfassend einen Schritt, bei dem es einem Adsorptionsmittel ermöglicht wird, den Schadstoff zu adsorbieren.

16. Verfahren nach Anspruch 2,
**dadurch gekennzeichnet, dass**
das durch das zweckentsprechende Wasser geleitete Gas das den aus dem verseuchten Erdreich herausgelösten Schadstoff enthaltende Gas ist.

17. Vorrichtung zum Reinigen von verseuchtem Erdreich, das einen Schadstoff enthält, **dadurch gekennzeichnet, dass** sie folgendes umfasst:
eine Einrichtung (5) zum Erwärmen des verseuchten Erdreichs (1) derart, dass das Erdreich den Schadstoff abgibt, eine Einrichtung (8) zum in Kontakt Bringen des abgegebenen Schadstoffes mit zweckentsprechendem Wasser, das den Schadstoff in Gegenwart von Licht zu zersetzen vermag, und eine Einrichtung (4) zum Bestrahlen des zweckentsprechenden Wassers mit Licht.

18. Vorrichtung zum Reinigen von verseuchtem Erdreich, das einen Schadstoff enthält, **dadurch gekennzeichnet, dass** sie folgendes umfasst:
eine Gas abgebende Einrichtung (5) zum Erwärmen des verseuchten Erdreichs (1) derart, dass das Erdreich ein den Schadstoff enthaltendes Gas abgibt;
eine ein chlorhaltiges Gas erzeugende Einrichtung (3) für die Erzeugung eines chlorhaltigen Gases, indem ein Gas durch zweckentsprechendes Wasser geleitet wird, und letzteres dadurch Chlorgas zu erzeugen vermag;
eine Mischeinrichtung (13) zum Mischen des schadstoffhaltigen Gases und
des chlorhaltigen Gases derart, dass ein gasförmiges Gemisch entsteht; und
eine Lichtbestrahlungseinrichtung (4) zum Bestrahlen des gasförmigen Gemischs mit Licht.

19. Vorrichtung nach Anspruch 17 oder 18,
**dadurch gekennzeichnet, dass**
das Erwärmen unter Verwendung einer Heizeinrichtung (5) erfolgt.

20. Vorrichtung nach Anspruch 17 oder 18,
**dadurch gekennzeichnet, dass**
das Erwärmen durchgeführt wird, indem das verseuchte Erdreich mit einer anorganischen Verbindung, die mit Wasser exotherm reagiert, gemischt wird.

21. Vorrichtung nach Anspruch 17 oder 18,
**dadurch gekennzeichnet, dass**
das zweckentsprechende Wasser durch Elektrolyse von einen Elektrolyt enthaltendem Wasser erzeugt wird.

22. Vorrichtung nach Anspruch 17 oder 18,
**dadurch gekennzeichnet, dass**
das zweckentsprechende Wasser vorliegt als eine wässrige Lösung, die Hypochlorsäure enthält.

23. Vorrichtung nach Anspruch 17 oder 18,
**dadurch gekennzeichnet, dass**
das zweckentsprechende Wasser eine Wasserstoffionenkonzentration (pH-Wert) von 1 bis 4, ein Redox-Potential (Arbeitselektrode: Platinelektrode, Bezugselektrode, Silber-Silberchlorid-Elektrode) von 800 bis 1500 mV und
eine Chlorkonzentration von 5 bis 150 mg/l aufweist.

24. Vorrichtung nach Anspruch 17 oder 18,
**dadurch gekennzeichnet, dass**
das zweckentsprechende Wasser eine Wasserstoffionenkonzentration (pH-Wert) von 4 bis 10, ein Redox-Potential (Arbeitselektrode: Platinelektrode, Bezugselektrode, Silber-Silberchlorid-Elektrode) von 300 bis 1100 mV und eine Chlorkonzentration von 2 bis 100 mg/l aufweist.

25. Vorrichtung nach Anspruch 17 oder 18,
**dadurch gekennzeichnet, dass**
das Licht in der Einrichtung (4) zum Bestrahlendes zweckentsprechenden Wassers ein solches einer Wellenlänge im Bereich von 300 bis 500 nm umfasst.

26. Vorrichtung nach Anspruch 18,
**dadurch gekennzeichnet, dass**
die Einrichtung zum Erwärmen des verseuchten Erdreichs ein Drehrohrofen ist.

27. Vorrichtung nach Anspruch 18,
**dadurch gekennzeichnet, dass**
das durch das zweckentsprechende Wasser geleitete Gas das den aus dem verseuchten Erdreich herausgelösten Schadstoff enthaltende Gas ist.

28. Vorrichtung nach Anspruch 18,
wobei die chlorhaltiges Gas erzeugende Einrichtung umfasst:
eine Aufnahmeeinrichtung (14) zum Aufnehmen von zweckentsprechendem Wasser;
eine zweckentsprechendes Wasser zuführende Einrichtung (9, 10), zur Zufuhr des zweckentsprechenden Wassers zur Aufnahmeeinrichtung;
eine erste Gaszuführungseinrichtung (15) zum Zuführen eines Gases durch das zweckentsprechende Wasser derart, dass ein chlorhaltiges Gas, das vom zweckentsprechenden Wasser stammt, erzeugt wird;
eine zweite Gaszuführungseinrichtung (31), zur Zufuhr des chlorhaltigen Gases einer weiteren Aufnahmeeinrichtung (13); und
eine Konzentrationsmesseinrichtung (16) zum Messen der Konzentration des chlorhaltigen Gases;
wobei die zweckentsprechendes Wasser zuführende Einrichtung (9, 10), die erste Gaszuführungseinrichtung, die zweite Gaszuführungseinrichtung und die Konzentrationsmesseinrichtung je mit der Aufnahmeeinrichtung verbunden sind.

29. Vorrichtung nach Anspruch 28,
**dadurch gekennzeichnet, dass**
das durch das zweckentsprechende Wasser geleitete Gas nicht mit dem zweckentsprechenden Wasser reagiert.

30. Vorrichtung nach Anspruch 28,
**dadurch gekennzeichnet, dass**
in dem zweckentsprechenden Wasser beim Hindurchleiten des Gases eine große Anzahl Blasen erzeugt wird.

31. Vorrichtung nach Anspruch 28,
**dadurch gekennzeichnet, dass**
die erste Gaszuführungseinrichtung (15) in Abhängigkeit von der Konzentration des von der Konzentrationsmesseinrichtung (16) gemessenen
chlorhaltigen Gases gesteuert wird.

32. Vorrichtung nach Anspruch 28,
**dadurch gekennzeichnet, dass**
die zweckentsprechendes Wasser zuführende Einrichtung (9, 10) in Abhängigkeit von der Konzentration des von der Konzentrationsmesseinrichtung (16) gemessenen chlorhaltigen Gases gesteuert wird.

33. Vorrichtung nach einem der Ansprüche 28 bis 32, wobei
die Messeinrichtung eine Gasaufnahmeeinrichtung zur Aufnahme mehrerer Gase umfasst, einschließlich eines chlorhaltigen Gases, das von der zweiten Gaszuführungseinrichtung zugeführt wird; und
die verseuchtes Gas zuführende Einrichtung mit der Gasaufnahmeeinrichtung verbunden ist.

34. Vorrichtung nach Anspruch 33,
**dadurch gekennzeichnet, dass**
die zweite Gaszuführungseinrichtung mit der Gasaufnahmeeinrichtung verbunden ist.

35. Vorrichtung nach Anspruch 33 oder 34,
**dadurch gekennzeichnet, dass**
sich die Konzentrationsmesseinrichtung in der Gasaufnahmeeinrichtung befindet.

36. Vorrichtung nach Anspruch 35,
**dadurch gekennzeichnet, dass**
die Konzentration des chlorhaltigen Gases, das von der zweiten Gaszuführungseinrichtung (31) zugeführt wird, oder die des verseuchten Gases, das von der verseuchtes Gas zuführenden Einrichtung zugeführt wird, in der Gasaufnahmeeinrichtung (13) gemessen wird von der Konzentrationsmesseinrichtung (16), die sich in der Gasaufnahmeeinrichtung befindet.

37. Vorrichtung nach Anspruch 36,
**dadurch gekennzeichnet, dass**
zumindest ein Wert aus Konzentration des chlorhaltigen Gases, Bestrahlungsintensität der Lichtbestrahlungseinrichtung und Strömungsrate des verseuchten Gases (18) in Abhängigkeit von den Messwerten der Konzentrationsmesseinrichtung gesteuert wird.

38. Vorrichtung nach Anspruch 36,
**dadurch gekennzeichnet, dass**
zumindest ein Wert aus Konzentration des chlorhaltigen Gases, Bestrahlungsintensität der Lichtbestrahlungseinrichtung und Strömungsrate des verseuchten Gases in Abhängigkeit von den Messwerten der Konzentrationsmesseinrichtung gesteuert wird.

39. Vorrichtung nach Anspruch 33,
**dadurch gekennzeichnet, dass**
die verseuchtes Gas zuführende Einrichtung (8) mit der Aufnahmeeinrichtung (2) für verseuchtes Erdreich zum Aufnehmen des verseuchten Erdreichs verbunden ist und das verseuchte Gas, das aus dem verseuchten Erdreich abgegeben wird, der Gasaufnahmeeinrichtung (13) zuführen kann.

40. Vorrichtung nach Anspruch 39,
**dadurch gekennzeichnet, dass**
die Aufnahmeeinrichtung (2) für verseuchtes Erdreich mit einer Heizeinrichtung (5) ausgestattet ist.

41. Vorrichtung nach Anspruch 39 oder 40,
**dadurch gekennzeichnet, dass**
die Aufnahmeeinrichtung (2) für verseuchtes Erdreich mit einer Rühreinrichtung (12) zum Rühren des darin enthaltenen verseuchten Erdreichs ausgestattet ist.

42. Vorrichtung nach Anspruch 40 oder 41,
**dadurch gekennzeichnet, dass**
die Aufnahmeeinrichtung (2) für verseuchtes Erdreich mit einer Konzentrationsmesseinrichtung (16) zum Messen der Konzentration eines Gases ausgestattet ist, das aus dem darin enthaltenen verseuchten Erdreich abgegeben wird.

43. Vorrichtung nach Anspruch 40 oder 41,
**dadurch gekennzeichnet, dass**
die Heizeinrichtung (5) oder die Rühreinrichtung (12) in Abhängigkeit von den Messwerten der Konzentrationsmesseinrichtung (16) zum Messen der Konzentration des aus dem verseuchten Erdreich abgegebenen Gases gesteuert wird.

## Revendications

1. Procédé pour purifier un sol pollué qui contient un polluant, **caractérisé en ce qu'**il comprend les étapes consistant : à chauffer le sol pollué pour amener le sol à émettre le polluant et à mettre le polluant émis en contact avec de l'eau fonctionnelle dans des conditions d'irradiation par de la lumière pour décomposer le polluant, dans lequel l'eau fonctionnelle est capable de décomposer le polluant en présence de lumière.

2. Procédé pour purifier un sol pollué qui contient un polluant, **caractérisé en ce qu'**il comprend les étapes consistant: à chauffer le sol pollué pour amener le sol à émettre un gaz contenant le polluant ;
à faire passer un gaz à travers de l'eau fonctionnelle capable d'engendrer ainsi du chlore gazeux afin d'engendrer un gaz contenant du chlore ;
à mélanger le gaz contenant le polluant et le gaz contenant du chlore pour former un mélange gazeux ; et
à irradier le mélange gazeux avec de la lumière pour décomposer le polluant.

3. Procédé pour purifier un sol pollué suivant la revendication 1 ou 2, **caractérisé en ce que** le chauffage est effectué en utilisant un élément chauffant.

4. Procédé pour purifier un sol pollué suivant la revendication 1 ou 2, **caractérisé en ce que** le chauffage est effectué en mélangeant le sol pollué à un composé inorganique qui réagit exothermiquement avec l'eau.

5. Procédé pour purifier un sol pollué suivant la revendication 4, **caractérisé en ce qu'**un traitement d'agitation par roulement est effectué après mélange du sol pollué au composé inorganique.

6. Procédé pour purifier un sol pollué suivant la revendication 4, **caractérisé en ce qu'**un traitement d'agitation mécanique est effectué après mélange du sol pollué au composé inorganique.

7. Procédé pour purifier un sol pollué suivant la revendication 1 ou 2, **caractérisé en ce que** l'eau fonctionnelle est de l'eau produite par électrolyse d'eau contenant un électrolyte.

8. Procédé pour purifier un sol pollué suivant la revendication 7, **caractérisé en ce que** l'eau fonctionnelle est de l'eau fonctionnelle acide produite à proximité d'une anode par électrolyse de l'eau contenant un électrolyte.

9. Procédé pour purifier un sol pollué suivant la revendication 7 ou 8, **caractérisé en ce que** l'électrolyte est au moins un électrolyte choisi dans le groupe consistant en chlorure de sodium et chlore de potassium.

10. Procédé pour purifier un sol pollué suivant la revendication 1 ou 2, **caractérisé en ce que** l'eau fonctionnelle est une solution aqueuse contenant de l'acide hypochloreux.

11. Procédé pour purifier un sol pollué suivant la revendication 1 ou 2, **caractérisé en ce que** l'eau fonctionnelle a une concentration en ions hydrogène (valeur de pH) de 1 à 4, un potentiel d'oxydoréduction (électrode de travail : électrode de platine, électrode de référence :
électrode d'argent-chlorure d'argent) de 800 à 1500 mV et une concentration en chlore de 5 à 150 mg/l.

12. Procédé pour purifier un sol pollué suivant la revendication 1 ou 2, **caractérisé en ce que** l'eau fonctionnelle a une concentration en ions hydrogène (valeur de pH) de 4 à 10, un potentiel d'oxydoréduction (électrode de travail : électrode de platine, électrode de référence :
électrode d'argent-chlorure d'argent) de 300 à 1 100 mV et une concentration en chlore de 2 à 100 mg/l.

13. Procédé pour purifier un sol pollué suivant la revendication 1 ou 2, **caractérisé en ce que** la lumière comprend une lumière dont la longueur d'onde est de 300 à 500 nm.

14. Procédé pour purifier un sol pollué suivant la revendication 1 ou 2, **caractérisé en ce que** le polluant est un hydrocarbure aliphatique halogéné.

15. Procédé pour purifier un sol pollué suivant la revendication 1 ou 2, comprenant en outre l'étape consistant à laisser une matière adsorbante adsorber le polluant.

16. Procédé pour purifier un sol pollué suivant la revendication 2, **caractérisé en ce que** le gaz passé à travers l'eau fonctionnelle est le gaz contenant le polluant extrait du sol pollué.

17. Appareil pour purifier un sol pollué qui contient un polluant, **caractérisé en ce qu'**il comprend un moyen (5) pour chauffer le sol pollué (1) afin d'amener le sol à émettre le polluant, un moyen (8) pour mettre le polluant émis en contact avec de l'eau fonctionnelle capable de décomposer le polluant en présence de lumière, et un moyen (4) pour irradier l'eau fonctionnelle avec de la lumière.

18. Appareil pour purifier un sol pollué qui contient un polluant, **caractérisé en ce qu'**il comprend :
un moyen émettant un gaz (5) pour chauffer le sol pollué (1) afin d'amener le sol à émettre un gaz contenant le polluant ;
un moyen engendrant un gaz contenant du chlore (3) pour engendrer un gaz contenant du chlore en faisant passer un gaz à travers de l'eau fonctionnelle capable d'engendrer ainsi du chlore gazeux ;
un moyen de mélange (13) pour mélanger le gaz contenant le polluant et le gaz contenant du chlore de manière à former un mélange gazeux ; et
un moyen d'irradiation avec de la lumière (4) pour irradier le mélange gazeux avec de la lumière.

19. Appareil pour purifier un sol pollué suivant la revendication 17 ou 18, **caractérisé en ce que** le chauffage est effectué en utilisant un élément chauffant (5).

20. Appareil pour purifier un sol pollué suivant la revendication 17 ou 18, **caractérisé en ce que** le chauffage est effectué en mélangeant le sol pollué à un composé inorganique qui réagit exothermiquement avec l'eau.

21. Appareil pour purifier un sol pollué suivant la revendication 17 ou 18, **caractérisé en ce que** l'eau fonctionnelle est de l'eau produite par électrolyse d'eau contenant un électrolyte.

22. Appareil pour purifier un sol pollué suivant la revendication 17 ou 18, **caractérisé en ce que** l'eau fonctionnelle est une solution aqueuse contenant de l'acide hypochloreux.

23. Appareil pour purifier un sol pollué suivant la revendication 17 ou 18, **caractérisé en ce que** l'eau fonctionnelle a une concentration en ions hydrogène (valeur de pH) de 1 à 4, un potentiel d'oxydoréduction (électrode de travail : électrode de platine, électrode de référence :
électrode d'argent-chlorure d'argent) de 800 à 1500 mV et une concentration en chlore de 5 à 150 mg/l.

24. Appareil pour purifier un sol pollué suivant la revendication 17 ou 18, **caractérisé en ce que** l'eau fonctionnelle a une concentration en ions hydrogène (valeur de pH) de 4 à 10, un potentiel d'oxydoréduction (électrode de travail : électrode de platine, électrode de référence :
électrode d'argent-chlorure d'argent) de 300 à 1 100 mV et une concentration en chlore de 2 à 100 mg/l.

25. Appareil pour purifier un sol pollué suivant la revendication 17 ou 18, **caractérisé en ce que** la lumière dans le moyen (4) pour irradier l'eau fonctionnelle avec la lumière comprend une lumière dont la longueur d'onde est de 300 à 500 nm.

26. Appareil pour purifier un sol pollué suivant la revendication 18, **caractérisé en ce que** le moyen pour chauffer le sol pollué est un four tubulaire rotatif.

27. Appareil pour purifier un sol pollué suivant la revendication 18, **caractérisé en ce que** le gaz qui est passé à travers l'eau fonctionnelle est le gaz contenant le polluant extrait du sol pollué.

28. Appareil pour purifier un sol pollué suivant la revendication 18, dans lequel le moyen engendrant un gaz contenant du chlore comprend :
un moyen de confinement (14) destiné à contenir de l'eau fonctionnelle ;
un moyen de distribution d'eau fonctionnelle (9, 10) pour fournir l'eau fonctionnelle au moyen de confinement ;
un premier moyen de distribution de gaz (15) pour fournir un gaz à travers l'eau fonctionnelle afin d'engendrer un gaz contenant du chlore, dérivé de l'eau fonctionnelle ;
un second moyen de distribution de gaz (31) pour fournir le gaz contenant du chlore à autre moyen de confinement (13) ; et
un moyen de mesure de concentration (16) pour mesurer la concentration du gaz contenant du chlore ;
les moyens de distribution d'eau fonctionnelle (9, 10), le premier moyen de distribution de gaz, le second moyen de distribution de gaz et le moyen de mesure de concentration étant chacun connectés au moyen de confinement, respectivement.

29. Appareil pour purifier un sol pollué suivant la revendication 28, **caractérisé en ce que** le gaz passé à travers l'eau fonctionnelle ne réagit pas avec l'eau fonctionnelle.

30. Appareil pour purifier un sol pollué suivant la revendication 28, **caractérisé en ce qu'**un grand nombre de bulles est créé dans l'eau fonctionnelle par passage du gaz à travers celle-ci.

31. Appareil pour purifier un sol pollué suivant la revendication 28, **caractérisé en ce que** le premier moyen de distribution de gaz (15) est commandé suivant la concentration du gaz contenant du chlore mesurée par le moyen de mesure de concentration (16).

32. Appareil pour purifier un sol pollué suivant la revendication 28, **caractérisé en ce que** le moyen de distribution d'eau fonctionnelle (9, 10) est commandé suivant la concentration du gaz contenant du chlore mesurée par le moyen de concentration (16).

33. Appareil pour purifier un sol pollué suivant l'une quelconque des revendications 28 à 32, dans lequel
ledit moyen de mélange comprend un moyen contenant un gaz pour contenir plusieurs gaz comprenant un gaz contenant du chlore fourni par le second moyen de distribution de gaz ; et
le moyen de distribution de gaz pollué est connecté au moyen de confinement de gaz.

34. Appareil pour purifier un sol pollué suivant la revendication 33, **caractérisé en ce que** le second moyen de distribution de gaz est connecté au moyen de confinement de gaz.

35. Appareil pour purifier un sol pollué suivant la revendication 33 ou 34, **caractérisé en ce qu'**un moyen de mesure de concentration est placé dans le moyen de confinement de gaz.

36. Appareil pour purifier un sol pollué suivant la revendication 35, **caractérisé en ce que** la concentration du gaz contenant du chlore fourni par le second moyen de distribution de gaz (31), ou celle du gaz pollué fourni par le moyen de distribution de gaz pollué dans le moyen de confinement de gaz (13), est mesurée par le moyen de mesure de concentration (16) placé dans le moyen de confinement de gaz.

37. Appareil pour purifier un sol pollué suivant la revendication 36, **caractérisé en ce qu'**au moins l'un des paramètres consistant en la concentration du gaz contenant du chlore, l'intensité d'irradiation du moyen d'irradiation avec de la lumière et le débit du gaz pollué (18) est ajusté suivant les valeurs mesurées du moyen de mesure de concentration.

38. Appareil pour purifier un sol pollué suivant la revendication 36, **caractérisé en ce qu'**au moins l'un des paramètres consistant en le débit du gaz contenant du chlore, le temps d'irradiation du moyen d'irradiation avec de la lumière et le débit du gaz pollué est ajusté suivant les valeurs mesurées du moyen de mesure de concentration.

39. Appareil pour purifier un sol pollué suivant la revendication 33, **caractérisé en ce que** le moyen de distribution du gaz pollué (8) est connecté au moyen de confinement de sol pollué (2) pour contenir le sol pollué, et peut fournir le gaz pollué émis par le sol pollué au moyen de confinement du gaz (13).

40. Appareil pour purifier un sol pollué suivant la revendication 39, **caractérisé en ce que** le moyen de confinement de sol pollué (2) est muni d'un moyen de chauffage (5).

41. Appareil pour purifier un sol pollué suivant la revendication 39 ou 40, **caractérisé en ce que** le moyen de confinement de sol pollué (2) est muni d'un moyen d'agitation (12) pour agiter le sol pollué présent dans ledit moyen.

42. Appareil pour purifier un sol pollué suivant la revendication 40 ou 41, **caractérisé en ce que** le moyen de confinement de sol pollué (2) est muni d'un moyen de mesure de concentration (16) pour mesurer la concentration d'un gaz émis par le sol pollué se trouvant dans ledit moyen.

43. Appareil pour purifier un sol pollué suivant la revendication 40 ou 41, **caractérisé en ce que** le moyen de chauffage (5) ou le moyen d'agitation (12) est commandé suivant les valeurs mesurées du moyen de mesure de concentration (16) pour mesurer la concentration du gaz émis par le sol pollué.
